# EUROPÄISCHE PATENTANMELDUNG

(11) **EP 3 476 780 A1**
(43) Veröffentlichungstag der Anmeldung: **01.05.2019**
(21) Anmeldenummer: 18202860.5
(22) Anmeldetag: 26.10.2018
(51) Int. Cl.: B65G 47/51, B65B 55/20, B65G 60/00

(54) **VORRICHTUNG ZUM BEWEGEN VON STAPELBAREN LADUNGSTRÄGERN**

(30) Priorität: 30.10.2017 DE 202017106597 U
(71) Anmelder: Aberu GmbH, 78647 Trossingen (DE)
(72) Erfinder: KELLER, Friedhelm, 78647 Trossingen (DE)
(74) Vertreter: Westphal, Mussgnug & Partner Patentanwälte mbB

(57) **Zusammenfassung**

Die vorliegende Erfindung betrifft eine Vorrichtung zum Bewegen von stapelbaren Ladungsträgern (12), umfassend eine Greifeinheit (14) zum Ergreifen oder Untergreifen zumindest eines stapelbaren Ladungsträgers (12), eine Bewegungseinrichtung (20), mit welcher die Greifeinheit (14) innerhalb eines Aktionsraums (22) bewegbar ist, einen ersten Stapelbereich (28), in welchem zumindest ein stapelbarer Ladungsträger (12) ablegbar ist, einen zweiten Stapelbereich (28), in welchem zumindest ein stapelbarer Ladungsträger (12) ablegbar ist, wobei der erste Stapelbereich (28) und der zweite Stapelbereich (28) innerhalb des Aktionsraums (22) angeordnet sind, und zumindest eine Zu- und/oder Abführeinrichtung (32), mit welcher zumindest ein stapelbarer Ladungsträger (12) in den Aktionsraum (22) zuführbar und/oder aus dem Aktions-raum (22) abführbar ist und/oder mit welcher ein stapelbarer Ladungsträger (12) mit Ladegut befüllbar ist.

## Beschreibung

Die vorliegende Erfindung betrifft eine Vorrichtung zum Bewegen von stapelbaren Ladungsträgern.

Ladungsträger werden in der Logistik sehr häufig verwendet, um ein Ladegut zu transportieren und zu lagern. Die am häufigsten anzutreffenden Ausgestaltungen von Ladungsträgern sind Kisten und Paletten. Der wesentliche Vorteil der Ladungsträger ist, dass diese standardisiert und mit Greifeinheiten unabhängig von der Form des Ladeguts ergriffen und bewegt werden können, ohne dass es hierzu besonderer Anpassungen der Greifeinheiten bedarf. Bei der Verwendung von Kisten ergibt sich die Möglichkeit, diese zu stapeln, wodurch auf einer geringen Fläche eine große Menge des Ladeguts gelagert und transportiert werden kann.

Eine besondere Situation ergibt sich beim Befüllen und Entleeren der Ladungsträger: Ein von einer Werkzeugmaschine fertig bearbeitetes Werkstück muss weitertransportiert werden, beispielsweise zu einem Lager, wo das Werkstück gelagert und von wo aus es versendet werden kann. Je nach Ausgestaltung der Werkzeugmaschine wirft diese das fertig bearbeitete Werkstück aus oder legt es in einem Abgabebereich ab. Die Werkzeugmaschine kann so eingerichtet werden, dass sie das fertig bearbeitete Werkstück direkt in den Ladungsträger ablegt. Ist der Ladungsträger voll, muss dieser gegen einen unbefüllten Ladungsträger ausgetauscht werden. Sofern kein Förderband vorhanden ist, wird dieser Austausch manuell durchgeführt, wobei der befüllte Ladungsträger beispielsweise auf einen Transportwagen oder einem Stapelplatz abgelegt oder abgestellt wird. In vielen Fällen wiegen die befüllten Ladungsträger bis zu 10 bis 12 kg, so dass das manuelle Heben und Ablegen eine Gesundheitsgefährdung für den betreffenden Mitarbeiter darstellt.

In der EP 0 224 931 B1 ist eine Palettenwechseleinrichtung für eine Werkzeugmaschine offenbart, welche zwar den Transport von zu bearbeitenden und bearbeiteten Werkstücken innerhalb und in unmittelbarer Umgebung der Werkzeugmaschine ermöglicht. Allerdings müssen die zu bearbeitenden und bearbeiteten Werkstücke manuell in die Umgebung der Werkzeugmaschine eingebracht bzw. aus der Umgebung entnommen werden, so dass die in der EP 0 224 931 B1 offenbarte Palettenwechseleinrichtung die Gesundheitsgefährdung der betreffenden Mitarbeiter nicht verringern kann.

Die DE 42 17 079 A1 beschreibt eine Vorrichtung, mit welcher Gegenstände mit unterschiedlichen Eigenschaften, die auf einem gemeinsamen Förderband der Vorrichtung zugeführt werden, vom Förderband entnommen werden können. In der Vorrichtung werden die Gegenstände so sortiert, dass Gegenstände mit gleichen Eigenschaften beispielsweise in denselben Ladungsträgern abgelegt werden. Nachdem die Ladungsträger aber die Vorrichtung verlassen haben, müssen diese wiederum manuell weitertransportiert werden, so dass auch die in der DE 42 17 079 A1 offenbarte Vorrichtung die Gesundheitsgefährdung der betreffenden Mitarbeiter nicht verringern kann.

Um das Heben und Ablegen zu erleichtern, sind verschiedene Hubvorrichtungen entwickelt worden. Beispielsweise in der DE 202 16 192 U1 ist eine Hubvorrichtung offenbart, mit welcher ein Ladungsträger angehoben und abgesenkt werden kann. Hierbei muss der Ladungsträger aber manuell auf die Aufnahme gestellt und von ihr entnommen werden. Die DE 20 2017 001 339 U1 offenbart ebenfalls eine Hubvorrichtung, die mit einem Magazin gekoppelt ist, in welchem die vollen Ladungsträger abgelegt und leere Ladungsträger entnommen werden können. Ist das Magazin voll, wird es weggefahren und gegen ein leeres ausgetauscht. Da das Magazin einen bestimmten Platz benötigt, lässt es sich nicht überall abstellen. Zudem lassen sich die dort verwendeten Ladungsträger nicht stapeln. Die DE 10 2010 040 152 A1 offenbart eine Vorrichtung zum Umsetzen von befüllten Ladungsträgern von einem Transportband auf einen Transportwagen. Die Vorrichtung ist nicht dazu eingerichtet, unbefüllte Ladungsträger zu bewegen. Zudem setzt die Vorrichtung das Vorhandensein eines Transportbands voraus.

Aufgabe einer Ausführungsform der vorliegenden Erfindung ist es, eine Vorrichtung zum Bewegen von stapelbaren Ladungsträgern anzugeben, welche raumsparend ist und flexibel in bestehende Produktionsanlagen integriert werden kann. Darüber hinaus liegt einer Ausbildung der Erfindung die Aufgabe zugrunde, ein Verfahren anzugeben, mit welcher die erfindungsgemäße Vorrichtung betrieben werden kann.

Diese Aufgabe wird mit den in Anspruch 1 angegebenen Merkmalen gelöst. Vorteilhafte Ausführungsformen sind Gegenstand der Unteransprüche.

Eine Ausführungsform der Erfindung betrifft eine Vorrichtung zum Bewegen von stapelbaren Ladungsträgern, umfassend eine Greifeinheit zum Ergreifen oder Untergreifen zumindest eines stapelbaren Ladungsträgers, eine Bewegungseinrichtung, mit welcher die Greifeinheit innerhalb eines Aktionsraums bewegbar ist, einen ersten Stapelbereich, in welchem zumindest ein stapelbarer Ladungsträger ablegbar ist, einen zweiten Stapelbereich, in welchem zumindest ein stapelbarer Ladungsträger ablegbar ist, wobei der erste Stapelbereich und der zweite Stapelbereich innerhalb des Aktionsraums angeordnet sind, und zumindest eine Zu- und/oder Abführeinrichtung, mit welcher zumindest ein stapelbarer Ladungsträger in den Aktionsraum zuführbar und/oder aus dem Aktionsraum abführbar ist und/oder mit welcher ein stapelbarer Ladungsträger mit Ladegut befüllbar ist.

Die Greifeinheit kann zwei bewegbare Greifer aufweisen, welche den stapelbaren Ladungsträger zwischen ihnen einklemmen. Alternativ kann die Greifeinheit eine Stapelgabel aufweisen, mit welcher der stapelbare Ladungsträger untergriffen oder von oben gegriffen werden kann.

Die Bewegungseinrichtung kann beispielsweise als ein Greifarm ausgebildet sein. Unter Aktionsraum soll der Raum verstanden werden, welcher für die Greifeinheit erreichbar ist.

Der erste Stapelbereich kann zum Ablegen von leeren stapelbaren Ladungsträgern und der zweite Stapelbereich zum Ablegen von befüllten stapelbaren Ladungsträgern verwendet werden. Die Fläche der beiden Stapelbereiche muss nicht größer sein als die entsprechende Grundfläche der stapelbaren Ladungsträger. Da beide Stapelbereiche innerhalb des Aktionsraums liegen, sind sie von der Greifeinheit erreichbar. Es können auch mehrere erste Stapelbereiche und mehrere zweite Stapelbereiche vorgesehen sein, wenn dies vorteilhaft ist.

Die Zu- und/oder Abführeinrichtung kann ein Rollwagen, ein Förderband oder eine Rollenbahn sein, mit denen die befüllten stapelbaren Ladungsträger in den Aktionsraum zugeführt und die unbefüllten stapelbaren Ladungsträger aus dem Aktionsraum abgeführt werden können. Diese Ausgestaltung bietet sich beispielsweise dann an, wenn die Vorrichtung nicht direkt an der Werkzeugmaschine, welche das Ladegut produziert, aufgestellt werden kann. Die Zu- und/oder Abführeinrichtung kann aber auch das Ladegut direkt in den Aktionsraum zuführen, wo die Greifeinheit den unbefüllten stapelbarer Ladungsträger so anordnet, dass das Ladegut in den stapelbaren Ladungsträger überführt wird. In jedem Fall findet im Betrieb der Vorrichtung ein Befüllen und/oder ein Umstapeln der stapelbaren Ladungsträger statt, entweder direkt in der Vorrichtung oder an einem anderen Ort. Im Betrieb der Vorrichtung befinden sich somit üblicherweise sowohl befüllte als unbefüllte stapelbare Ladungsträger in der Vorrichtung.

Insbesondere aufgrund der Tatsache, dass die beiden Stapelbereiche nicht größer als die Grundfläche der stapelbaren Ladungsträger sein müssen, lässt sich die vorschlagsgemäße Vorrichtung auf engem Raum einsetzen. Zudem lässt sich die Vorrichtung sehr einfach in bestehende Produktionsanlagen integrieren, da keine aufwendigen Maßnahmen notwendig sind, um Werkzeugmaschinen oder andere Einheiten der Produktionsanlage mit der Vorrichtung zu vernetzen. Hebe- und Senkbewegungen müssen nicht mehr manuell vorgenommen werden, so dass diesbezügliche Gesundheitsgefährdungen beseitigt werden.

Nach Maßgabe einer weiteren Ausführungsform weist die Vorrichtung zumindest einen im Aktionsraum angeordneten Befüllbereich auf, in welchem der stapelbare Ladungsträger mit einem Ladegut befüllbar ist. Der Befüllbereich kann von der Zu- und/oder Abführeinrichtung gebildet werden, was aber, wie bereits erwähnt, dann nicht der Fall ist, wenn die stapelbaren Ladungsträger außerhalb der Vorrichtung und somit außerhalb des Aktionsraums befüllt und anschließend in den Aktionsraum transportiert werden. Wenn der stapelbare Ladungsträger mit einem Schüttgut wie Sand oder Schaumstoffkugeln befüllt werden soll, kann ein Schlauch verwendet werden, aus dessen Öffnung das Schüttgut austritt. Der stapelbare Ladungsträger kann mit der Vorrichtung so in Bezug auf die Öffnung positioniert werden, dass das Schüttgut in den stapelbaren Ladungsträger gelangen kann. Ein stapelbarer Ladungsträger kann also an verschiedenen Stellen innerhalb der Vorrichtung befüllt werden, was dann sinnvoll ist, wenn zwei oder mehrere Ladegüter im selben stapelbarer Ladungsträger transportiert werden sollen, beispielsweise dann, wenn zwei miteinander verschraubbare Werkstücke gemeinsam transportiert werden sollen oder wenn Schaumstoffkugeln zum Schützen des Werkstücks während des Transports benötigt werden.

In einer weitergebildeten Ausführungsform kann die Vorrichtung eine Befülleinrichtung aufweisen, mit welcher der stapelbare Ladungsträger mit Ladegut befüllbar ist. Je nach Ladegut ist es möglich, das Ladegut in den stapelbaren Ladungsträger fallen zu lassen. In anderen Fällen müssen aber besondere Maßnahmen ergriffen werden, um das Ladegut in den stapelbaren Ladungsträger abzulegen, beispielsweise dann, wenn das Ladegut zur optimalen Raumausnutzung gezielt im stapelbaren Ladungsträger angeordnet werden soll oder wenn das Ladegut bruchempfindlich ist. Die Befülleinrichtung kann so ausgestattet werden, dass die stapelbaren Ladungsträger wunschgemäß beladen werden können.

Bei einer weitergebildeten Ausführungsform kann die Bewegungseinrichtung eine vertikal verlaufende Führungssäule umfassen, entlang welcher die Greifeinheit in vertikaler Richtung bewegbar ist. Die Verwendung einer Führungssäule ermöglicht es auf konstruktiv einfache Weise, die Greifeinheit in vertikaler Richtung bewegbar auszugestalten.

Bei einer weiteren Ausführungsform kann die Bewegungseinrichtung einen horizontal verlaufenden Führungsbalken aufweisen, der vertikal bewegbar mit der Führungssäule verbunden ist und entlang welchem die Greifeinheit in horizontaler Richtung bewegbar ist. In dieser Ausführungsform kann die Bewegungseinrichtung nach Art eines Kreuzschlittens ausgeführt sein, wodurch es auf konstruktiv einfache und platzsparende Weise möglich ist, die Greifeinheit entlang einer durch die Vertikale verlaufende Ebene zu bewegen.

Eine weitergebildete Ausführungsform zeichnet sich dadurch aus, dass die Bewegungseinrichtung einen Halteholm aufweist, der horizontal bewegbar mit dem Führungsbalken verbunden ist und an welchem die Greifeinheit befestigt ist. Wie bereits erwähnt, kann die Greifeinheit mittels des an der Führungssäule befestigten Führungsbalkens entlang einer durch die Vertikale verlaufende Ebene bewegt werden. Der Halteholm, der horizontal am Führungsbalken befestigt ist, kann die Greifeinheit zusätzlich noch senkrecht zur durch die Vertikale verlaufenden Ebene bewegt werden. Insofern kann die Greifeinheit in alle drei Raumachsen bewegt werden, wodurch der Aktionsraum deutlich erweitert wird.

Nach Maßgabe einer weiteren Ausführungsform ist die Führungssäule um eine vertikal verlaufende Drehachse drehbar. Es ist mit relativ wenig konstruktivem Aufwand möglich, die Führungssäule drehbar auszugestalten. Hierdurch kann die Greifeinheit in alle drei Raumachsen bewegt werden, ohne dass ein Führungsbalken notwendig ist.

Eine weitere Ausführungsform zeichnet sich dadurch aus, dass die Führungssäule eine Drehführung umfasst, welche derart ausgestaltet ist, dass die Greifeinheit mit einem sich ändernden Abstand zur Drehachse um die Drehachse drehbar ist. Die Drehführung kann beispielsweise die Form eines Bogenvielecks aufweisen, worunter ein Polygon zu verstehen ist, dessen Seiten durch Kreisbögen zwischen jeweils zwei benachbarten Eckpunkten ersetzt sind. Beim Drehen um die Drehachse der Führungssäule bewegt sich die Greifeinheit folglich nicht auf einer Kreisbahn, sondern ändert den Abstand zur Drehachse. Hierdurch können beispielsweise die beiden Stapelbereiche weiter entfernt von der Drehachse angeordnet werden als der Befüllbereich, ohne dass der Halteholm horizontal bewegbar ausgeführt werden muss. Die Zugänglichkeit der Stapelbereiche kann verbessert werden.

Eine weitere Ausführungsform ist dadurch gekennzeichnet, dass die Befülleinrichtung in vertikaler Richtung bewegbar mit der Führungssäule verbunden ist. Hierdurch kann der Befüllungsvorgang zielgerichteter und flexibler durchgeführt werden. Insbesondere können die stapelbarer Ladungsträger in unterschiedlichen Höhen befüllt werden.

In einer weiteren Ausführungsform kann die Befülleinrichtung horizontal bewegbar sein. Hierdurch ist es möglich, die stapelbaren Ladungsträger gleichmäßiger zu befüllen, um beispielsweise Schüttanhäufungen zu vermeiden.

Bei einer weiteren Ausführungsform ist die Befülleinrichtung um eine horizontal verlaufende Drehachse drehbar. Die Befülleinrichtung kann gekippt werden, um ein Schüttgut auszuschütten, wodurch die Befüllung vereinfacht werden kann.

In einer weiteren Ausführungsform ist die Zu- und/oder Abführeinrichtung angetrieben. Die stapelbaren Ladungsträger können ohne manuelle Hilfe gezielt bewegt werden, wodurch das Befüllen und das Bewegen der stapelbaren Ladungsträger weiter automatisiert und damit effektiver gestaltet werden kann.

Gemäß einer weiteren Ausführungsform weist die Vorrichtung eine Fahreinheit auf, mit welcher die Bewegungsvorrichtung verfahrbar ist. Folglich können der erste Stapelbereich und der zweite Stapelbereich in einem größeren Abstand voneinander angeordnet werden. Die Stapelbereiche können innerhalb einer Fabrikhalle dort angeordnet werden, wo sie aus logistischer Sicht am sinnvollsten sind. Die Vorrichtung kann die Strecke zwischen den beiden Stapelbereichen abfahren, die mittels einer Induktionsschleife vorgegeben wird. Die innerbetrieblichen Abläufe können hiermit weiter optimiert werden.

Eine fortgebildete Ausführungsform zeichnet sich dadurch aus, dass die Vorrichtung eine Entleerungseinheit zum Entleeren von befüllten stapelbaren Ladungsträgern umfasst. Die vorherigen Ausführungsformen sind insbesondere auf das Befüllen der leeren stapelbaren Ladungsträger und auf das Stapeln der befüllten stapelbaren Ladungsträger gerichtet. Spätestens dann, wenn die maximale Anzahl der stapelbaren gefüllten Ladungsträger im zweiten Stapelabschnitt erreicht ist, müssen die befüllten stapelbaren Ladungsträger entweder weitertransportiert oder entleert werden. Insbesondere dann, wenn die befüllten stapelbaren Ladungsträger schwer sind, würde eine manuelle Entleerung wieder zu einer gesundheitlichen Gefährdung der Mitarbeiter führen. In diesem Ausführungsbeispiel können die stapelbaren Ladungsträger mittels der Entleerungseinheit entleert werden. Hierzu kann die Entleerungseinrichtung einen Adapter aufweisen, der zur Aufnahme der stapelbaren Ladungsträger dient. Der Adapter kann um eine horizontal verlaufende Drehachse dreh- oder kippbar sein, so dass die stapelbaren Ladungsträger gekippt und somit das Ladegut ausgeschüttet werden kann. Der Adapter kann mit einer weiteren Bewegungseinrichtung bewegt werden, welche im Wesentlichen denselben Aufbau aufweisen kann wie die Bewegungseinrichtung nach einem der zuvor vorgestellten Ausführungsformen. Auch ist es möglich, die Greifeinheit um eine horizontal verlaufende Drehachse drehbar auszuführen, so dass auch ohne die Entleerungseinrichtung die stapelbaren Ladungsträger entleert werden können. Allerdings muss in diesem Fall die Entleerung innerhalb des Aktionsraums stattfinden, wohingegen bei der Verwendung der Entleerungseinrichtung die Entleerung außerhalb des Aktionsraums vorgenommen wird.

Eine weitergebildete Ausführungsform ist dadurch gekennzeichnet, dass der erste Stapelbereich und/oder der zweite Ablagebereich eine Stabilisierungseinrichtung zum Stabilisieren der stapelbaren Ladungsträger aufweist. Mit zunehmender Anzahl von übereinander gestapelten Ladungsträgern nimmt aber die Neigung zu, dass die gestapelten Ladungsträger umkippen. Die Stabilisierungseinrichtung, welche beispielsweise Stützwände umfassen kann, wirkt dem Umfallen entgegen. Die Anzahl der stapelbaren Ladungsträger wird folglich erhöht.

Eine fortgebildete Ausführungsform weist eine in der Vorrichtung angeordnete Steuereinheit zum Steuern der Vorrichtung auf. Dadurch, dass die Steuereinheit in der Vorrichtung selbst angeordnet ist, wird die Integration in bestehende Produktionsanlagen erleichtert, da diese nicht auf die Vorrichtung angepasst werden müssen. Die Vorrichtung kann somit völlig autonom betrieben werden und stellt somit eine "Stand-Alone-Ausführung" dar. Sie kann problemlos auf verschiedene Aufgaben angepasst werden. Die Steuereinheit kann eine Sende- und Empfängereinheit aufweisen, mit welcher sie von außen, beispielsweise über ein Tablet, eingerichtet und ferngewartet werden kann. Mit der Sende- und Empfängereinheit kann eine Kommunikation mit anderen Einheiten der Produktionsanlage aufgebaut werden, wenn dies vorteilhaft sein sollte. Auch kann die Steuereinheit von einer Kontrolleinheit der Produktionsanlage gesteuert werden, so dass die vorschlagsgemäße Vorrichtung auf die Abläufe der Produktionsanlage angepasst werden kann.

Eine Ausgestaltung der Erfindung betrifft ein Verfahren zum Bewegen von stapelbaren Ladungsträgern mit einer Vorrichtung nach einem der vorherigen Ausführungsformen, umfassend folgende Schritte:
- Ablegen oder Abstellen zumindest eines unbefüllten stapelbaren Ladungsträgers im ersten Stapelbereich,
- Ergreifen oder Untergreifen des zumindest einen unbefüllten stapelbaren Ladungsträgers und Bewegen des unbefüllten stapelbaren Ladungsträgers zur Zu- und/oder Abführeinrichtung oder in den Befüllbereich mittels der Greifeinheit,
- Befüllen des unbefüllten stapelbaren Ladungsträgers mit Ladegut mittels einer Befülleinrichtung, wenn sich der stapelbare Ladungsträger im Befüllbereich befindet, oder mittels der Zu- und/oder Abführeinrichtung, und
- Ergreifen oder Untergreifen des befüllten stapelbaren Ladungsträgers, Bewegen des befüllten stapelbaren Ladungsträgers in den zweiten Stapelbereich und Ablegen oder Abstellen des befüllten stapelbaren Ladungsträgers im zweiten Stapelbereich mittels der Greifeinheit.

Die technischen Effekte und Vorteile, die sich mit dem vorschlagsgemäßen Verfahren erreichen lassen, entsprechen denjenigen, die für die vorliegende Vorrichtung erörtert worden sind. Zusammenfassend sei darauf hingewiesen, dass es auf engstem Raum möglich ist, stapelbare Ladungsträger effektiv zu befüllen und abzulegen, ohne dass aufwendige Maßnahmen notwendig sind, um das Befüllen in den Produktions- oder Verarbeitungsprozess der Ladegüter zu integrieren.

Beispielhafte Ausführungsformen der Erfindung werden im Folgenden unter Bezugnahme auf die beigefügten Zeichnungen näher erläutert. Es zeigen
- Figur 1A: eine prinzipielle Draufsicht auf ein erstes Ausführungsbeispiel einer erfindungsgemäßen Vorrichtung zum Bewegen von stapelbaren Ladungsträgern,
- Figur 1B: eine prinzipielle Seitenansicht des in Figur 1A dargestellten Ausführungsbeispiels,
- Figur 1C: eine prinzipielle Hinteransicht des in Figur 1A dargestellten Ausführungsbeispiels,
- Figur 2: eine prinzipielle Draufsicht auf ein zweites Ausführungsbeispiel der erfindungsgemäßen Vorrichtung,
- Figur 3A: eine prinzipielle Draufsicht auf ein drittes Ausführungsbeispiel der erfindungsgemäßen Vorrichtung,
- Figur 3B: eine prinzipielle Hinteransicht des in Figur 3A dargestellten Ausführungsbeispiels,
- Figur 4: eine prinzipielle Draufsicht auf ein viertes Ausführungsbeispiel der erfindungsgemäßen Vorrichtung,
- Figur 5: eine prinzipielle Draufsicht auf ein fünftes Ausführungsbeispiel der erfindungsgemäßen Vorrichtung,
- Figur 6: eine prinzipielle Seitenansicht eines sechsten Ausführungsbeispiels der erfindungsgemäßen Vorrichtung,
- Figur 7: eine prinzipielle Seitenansicht eines siebten Ausführungsbeispiels der erfindungsgemäßen Vorrichtung,
- Figur 8: eine prinzipielle Seitenansicht eines achten Ausführungsbeispiels der erfindungsgemäßen Vorrichtung,
- Figur 9A: eine prinzipielle Seitenansicht auf ein neuntes Ausführungsbeispiel einer erfindungsgemäßen Vorrichtung zum Bewegen von stapelbaren Ladungsträgern, und
- Figur 9B: eine prinzipielle Draufsicht des in Figur 9A dargestellten Ausführungsbeispiels.

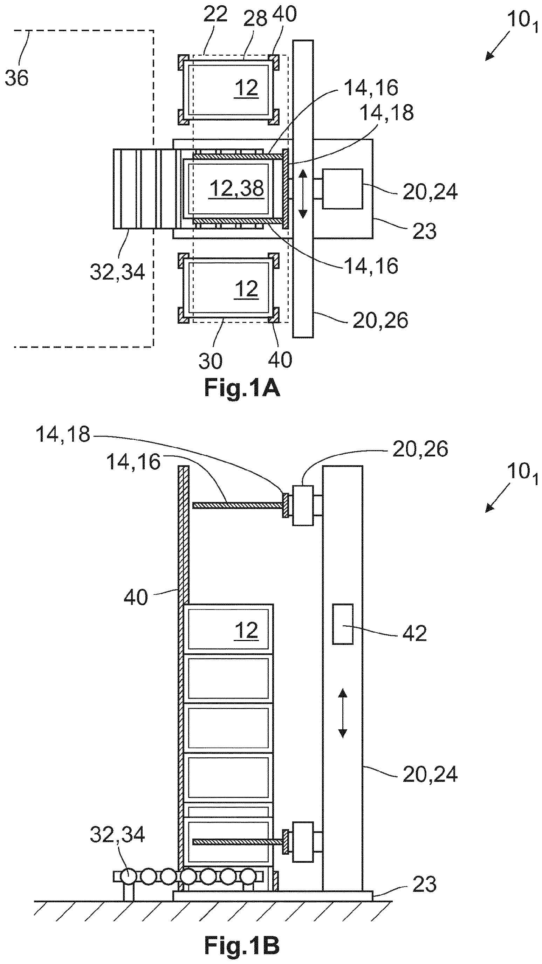

Das in den Figuren 1A bis 1C gezeigte erste Ausführungsbeispiel einer erfindungsgemäßen Vorrichtung 10₁ zum Bewegen von stapelbaren Ladungsträgern 12 weist eine Greifeinheit 14 auf, mit welcher zumindest ein stapelbarer Ladungsträger 12, im dargestellten Ausführungsbeispiel als stapelbare Kisten ausgeführt, ergriffen werden kann. Die Greifeinheit 14 umfasst zwei Greifer 16, die entlang eines Querträgers 18 aufeinander zu und voneinander weg bewegt werden können. Die Greifer 16 klemmen den stapelbaren Ladungsträger 12 ein und halten ihn reibschlüssig und/oder greifen in nicht dargestellte Ausnehmungen ein oder untergreifen Vorsprünge, so dass sie den stapelbaren Ladungsträger 12 formschlüssig halten.

Die Greifeinheit 14 ist mit einer Bewegungseinrichtung 20 verbunden, mit welcher die Greifeinheit 14 innerhalb eines Aktionsraums 22 bewegt werden kann. Der Aktionsraum 22 ist der Raum, innerhalb welchem die Greifeinheit 14 von der Bewegungseinrichtung 20 bewegt werden kann. Die Bewegungseinrichtung 20 ist auf einer Grundplatte 23 gelagert und umfasst eine vertikal verlaufene Führungssäule 24, an welcher ein horizontal verlaufender Führungsbalken 26 befestigt ist. Die Greifeinheit 14 ist horizontal entlang des Führungsbalkens 26 und der Führungsbalken 26 ist entlang der Führungssäule 24 vertikal bewegbar. Folglich kann die Greifeinheit 14 mit der Bewegungseinrichtung 20 in einer durch die Vertikale verlaufende Ebene bewegt werden.

Die Vorrichtung 10₁ umfasst weiterhin einen ersten Stapelbereich 28 und einen zweiten Stapelbereich 30. Die beiden Stapelbereiche 28, 30 sind zumindest teilweise innerhalb des Aktionsraums 22 angeordnet, so dass die stapelbaren Ladungsträger 12 von der Greifeinheit 14 in die beiden Stapelbereiche 28, 30 und von den beiden Stapelbereichen 28, 30 weg bewegt und dort gestapelt werden können.

Darüber hinaus weist die Vorrichtung 10₁ eine Zu- und/oder Abführeinrichtung 32 auf, die im dargestellten Ausführungsbeispiel als eine Rollenbahn 34 ausgestaltet ist und über welche die stapelbaren Ladungsträger 12 dem Aktionsraum 22 zugeführt und aus dem Aktionsraum 22 abgeführt werden können. Die Rollenbahn 34 ist mit nicht dargestellten Antriebsmitteln angetrieben. Folglich kann ein leerer stapelbarer Ladungsträger 12 von der Greifeinheit 14 vom ersten Stapelbereich 28 entnommen und auf die Rollenbahn 34 gestellt und mit der Rollenbahn 34 zu einer vor der Vorrichtung 10₁ angeordneten Prozessmaschine oder Werkzeugmaschine 36 transportiert werden, wo sie mit einem nicht dargestellten Ladegut befüllt wird. Anschließend wird der befüllte stapelbarer Ladungsträger 12 wieder in den Aktionsraum 22 geführt und mit der Greifeinheit 14 von der Rollenbahn 34 entnommen und im zweiten Stapelbereich 30 abgelegt.

Alternativ kann die Zu- und/oder Abführeinrichtung 32 auch so ausgestaltet sein, dass sie das Ladegut in den Aktionsraum 22 befördert, wo die Greifeinheit 14 den stapelbaren Ladungsträger 12 so positioniert, dass der stapelbare Ladungsträger 12 mit dem Ladegut befüllt wird. In diesem Fall bildet die Zu- und/oder Abführeinrichtung 32 einen Befüllbereich 38, so dass die stapelbarer Ladungsträger 12 innerhalb des Aktionsraums 22 befüllt werden.

Die Zu- und/oder Abführeinrichtung 32 ist zwischen dem ersten Stapelbereich 28 und dem zweiten Stapelbereich 30 angeordnet.

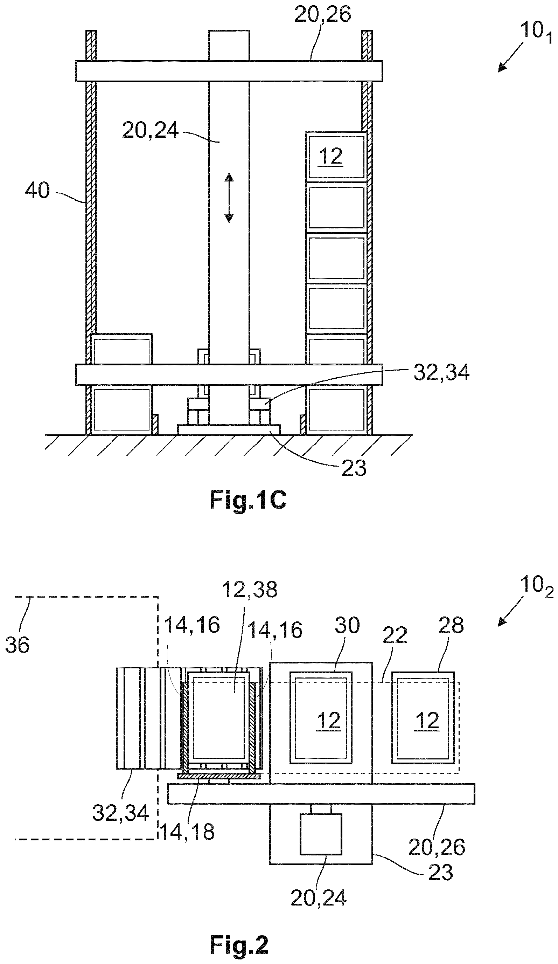

Wie insbesondere aus den Figuren 1B und 1C erkennbar, weisen sowohl der erste Stapelbereich 28 und der zweite Stapelbereich 30 jeweils eine Stabilisierungseinrichtung 40 auf, die säulenartig ausgebildet ist. Die stapelbaren Ladungsträger 12 liegen an der Stabilisierungseinrichtung 40 an, wodurch verhindert wird, dass die stapelbaren Ladungsträger 12 umkippen.

Weiterhin umfasst die Vorrichtung 10₁ eine Steuereinheit 42, mit welcher die Vorrichtung 10₁ gesteuert werden kann. Insbesondere können die Bewegungen der Bewegungseinrichtung 20 und das Öffnen und Schließen der Greifeinheit 14 gesteuert werden.

In den Figuren 1B und 1C sind die Greifeinheit 14 und die Bewegungseinrichtung 20 in zwei verschiedenen, vertikal beabstandeten Positionen dargestellt. Diese Darstellung dient lediglich der Veranschaulichung. Das erste Ausführungsbeispiel umfasst nur eine Bewegungseinrichtung 20 und eine Greifeinheit 14.

In Figur 2 ist ein zweites Ausführungsbeispiel der erfindungsgemäßen Vorrichtung 10₂ anhand einer prinzipiellen Draufsicht dargestellt. Der wesentliche Aufbau der Vorrichtung 10₂ nach dem zweiten Ausführungsbeispiel gleicht demjenigen der Vorrichtung 10₁ nach dem ersten Ausführungsbeispiel, wobei jedoch die Zu- und/oder Abführeinrichtung 32 nicht, wie im ersten Ausführungsbeispiel, zwischen dem ersten Stapelbereich 28 und dem zweiten Stapelbereich 30 angeordnet ist, sondern neben dem zweiten Stapelbereich 30. Folglich sind der erste Stapelbereich 28 und der zweite Stapelbereich 30 benachbart zueinander angeordnet. Die Werkzeugmaschine 36 ist neben der Vorrichtung 10₂ angeordnet.

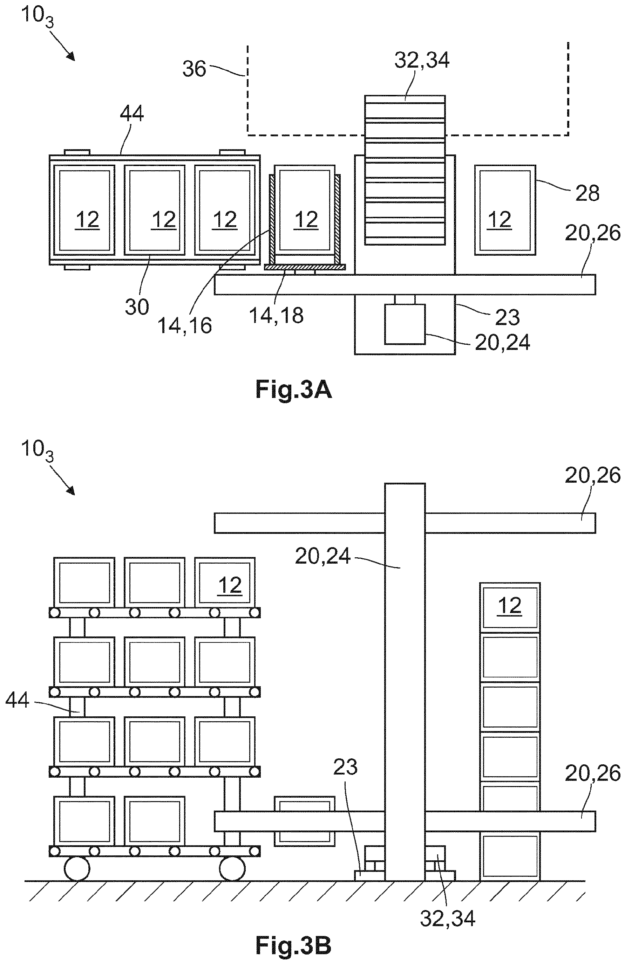

In den Figuren 3A und 3B ist ein drittes Ausführungsbeispiel der erfindungsgemäßen Vorrichtung 10₃ dargestellt. In diesem Fall wird der zweite Stapelbereich 30 von einem Transportwagen 44 mit mehreren Etagen gebildet, in welchem die Greifeinheit 14 die befüllten stapelbaren Ladungsträger 12 ablegt. Wie im ersten Ausführungsbeispiel ist die Zu- und/oder Abführeinrichtung 32 zwischen dem ersten Stapelbereich 28 und dem zweiten Stapelbereich 30 angeordnet, allerdings ist zwischen dem Transportwagen 44 und der Zu- und/oder Abführeinrichtung 32 ein Abstand eingehalten, damit unabhängig von der Höhe der Zu- und/oder Abführeinrichtung 32 alle Etagen des Transportwagens 44 von der Greifeinheit 14 erreicht werden können.

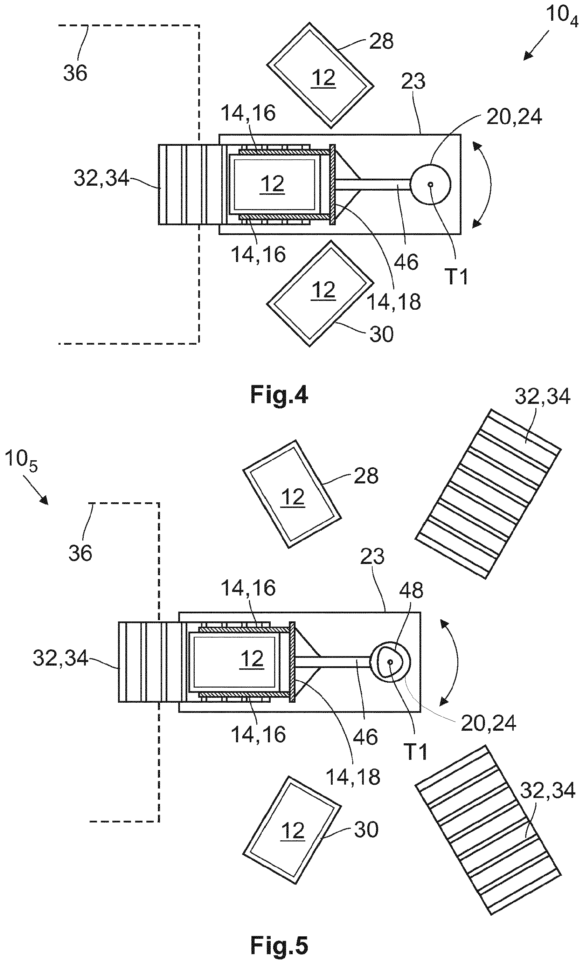

In Figur 4 ist ein viertes Ausführungsbeispiel der erfindungsgemäßen Vorrichtung 10₄ anhand einer prinzipiellen Draufsicht dargestellt. In diesem Ausführungsbeispiel weist die Bewegungseinrichtung 20 einen anderen Aufbau auf. Die Bewegungseinrichtung 20 weist keinen Führungsbalken 26 auf, sondern die Greifeinheit 14 ist mit einem Träger 46 an der Führungssäule 24 befestigt. Die Führungssäule 24 ist um eine vertikal verlaufende Drehachse T1 drehbar. Entsprechend sind der erste Stapelbereich 28 und der zweite Stapelbereich 30 zur Drehachse T1 hin ausgerichtet und schließen einen bestimmten Winkel zueinander und zur Zu- und/oder Abführeinrichtung 32 ein. Das Bewegen der stapelbaren Ladungsträger 12 umfasst in diesem Ausführungsbeispiel eine Drehbewegung um die Drehachse T1.

In Figur 5 ist ein fünftes Ausführungsbeispiel der erfindungsgemäßen Vorrichtung 10₅ anhand einer prinzipiellen Draufsicht dargestellt. Der prinzipielle Aufbau der Vorrichtung 10₅ nach dem fünften Ausführungsbeispiel entspricht im Wesentlichen demjenigen der Vorrichtung 10₄ nach dem vierten Ausführungsbeispiel. Allerdings sind noch zwei weitere Zu- und/oder Abführeinrichtungen 32 vorgesehen, die ebenfalls zur Drehachse T1 der Führungssäule 24 hin ausgerichtet sind. Die beiden weiteren Zu- und/oder Abführeinrichtungen 32 dienen in diesem Ausführungsbeispiel der Abfuhr von beladenen stapelbaren Ladungsträgern 12.

Weiterhin weist die Führungssäule 24 eine Drehführung 48 auf, welche in diesem Beispiel als ein Dreieck mit abgerundeten Ecken ausgestaltet ist. Zwei der abgerundeten Ecken zeigen zu den beiden Stapelbereichen 28, 30 hin. Die Drehführung 48 bewirkt, dass die Greifeinheit 14 nicht auf einer Kreisbahn, sondern mit einem sich ändernden Abstand um die Drehachse T1 gedreht wird. Der Abstand ist maximal, wenn die Greifeinheit 14 die beiden Stapelbereiche 28, 30 überstreicht. Die beiden Stapelbereiche 28, 30 weisen folglich im Vergleich zum vierten Ausführungsbeispiel einen größeren Abstand zur Drehachse T1 auf, wodurch beispielsweise die Zugänglichkeit zu den Stapelbereichen 28, 30 verbessert werden kann.

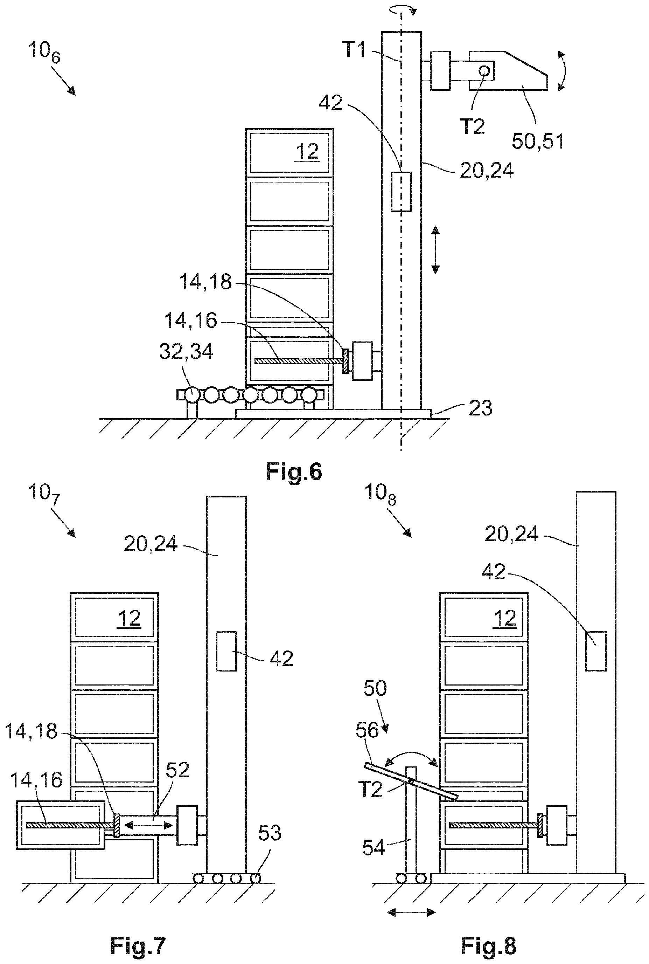

In Figur 6 ist ein sechstes Ausführungsbeispiel der erfindungsgemäßen Vorrichtung 10₆ anhand einer prinzipiellen Seitenansicht dargestellt. Die Vorrichtung 10₆ weist eine Befülleinrichtung 50 auf, mit welcher beispielsweise ein Schüttgut in die stapelbaren Ladungsträger 12 befüllt werden kann. Die Befülleinrichtung 50 ist wie auch die Greifeinheit 14 in horizontaler und vertikaler Richtung bewegbar an der Führungssäule 24 befestigt, die um die vertikal verlaufende Drehachse T1 drehbar ist. Die Befülleinrichtung 50 ist von der Greifeinheit 14 aus gesehen auf der gegenüberliegenden Seite der Führungssäule 24 angeordnet und mit einem Aufnahmeabschnitt 51 ausgestattet, der in diesem Ausführungsbeispiel nach Art einer Schaufel ausgebildet ist und der um eine horizontal verlaufende Drehachse T2 drehbar ist. Nicht dargestellt ist eine Ausführungsform, in welcher der Aufnahmeabschnitt 51 alternativ oder kumulativ um eine weitere horizontal verlaufende Drehachse drehbar ist.

Die Vorrichtung 10₆ nach dem sechsten Ausführungsbeispiel kann auf folgende Weise betrieben werden: Zunächst entnimmt die Greifeinheit 14 auf die bereits beschriebene Weise einen stapelbarer Ladungsträger 12 vom ersten Stapelbereich 28 und legt ihn auf der Zu- und/oder Abführeinrichtung 32 ab. Wie zum ersten Ausführungsbeispiel beschrieben, kann der stapelbare Ladungsträger 12 zu einer hier nicht dargestellten Werkzeugmaschine 36 transportiert und dort mit einem Ladegut befüllt und anschließend wieder in den Aktionsraum 22 zurück transportiert werden. Dieser Schritt ist aber nicht zwangsläufig notwendig. Gleichzeitig, bevor oder nachdem die Greifeinheit 14 den stapelbaren Ladungsträger 12 auf der Zu- und/oder Abführeinrichtung 32 abgelegt hat, wird die Befülleinrichtung 50 auf eine nicht dargestellte Weise mit einem Schüttgut befüllt. Anschließend wird die Führungssäule 24 um 180° gedreht. Die Greifeinheit 14 und die Befülleinrichtung 50 werden vertikal so verfahren, dass sie beim Drehen der Führungssäule 24 nicht mit weiteren stapelbaren Ladungsträgern 12 kollidieren. Anschließend wird die Befülleinrichtung 50 in einem wählbaren Abstand über dem stapelbaren Ladungsträger 12 positioniert und der Aufnahmeabschnitt 51 um die horizontal verlaufende Drehachse T2 gedreht, so dass das Schüttgut in den stapelbaren Ladungsträger 12 geschüttet wird. Die Zu- und/oder Abführeinrichtung 32 kann dabei aktiviert werden, so dass der stapelbare Ladungsträger 12 während des Befüllens in horizontaler etwas bewegt wird, wodurch eine gleichmäßige Befüllung erreicht und Schüttanhäufungen verringert werden. Nach erfolgter Befüllung wird die Führungssäule 24 um 180° gedreht und der befüllte stapelbarer Ladungsträger 12 mittels der Greifeinheit 14 im zweiten Stapelbereich 30 abgelegt.

In Figur 7 ist ein siebtes Ausführungsbeispiel der erfindungsgemäßen Vorrichtung 10₇ anhand einer prinzipiellen Seitenansicht dargestellt. Der prinzipielle Aufbau der Vorrichtung 10₇ gemäß dem siebten Ausführungsbeispiel entspricht weitgehend demjenigen der Vorrichtung 10₁ nach dem ersten Ausführungsbeispiel, allerdings ist die Greifeinheit 14 mit einem horizontal bewegbar mit dem Führungsbalken 26 verbundenen Halteholm 52 an der Führungssäule 24 befestigt. Der Halteholm 52 kann beispielsweise teleskopartig ausgeführt sein oder mit einem Spindelantrieb bewegt werden. Einerseits wird hierdurch der Aktionsraum 22 vergrößert, andererseits kann die Befüllung gleichmäßiger durchgeführt werden, um Schüttanhäufungen zu vermeiden.

Weiterhin weist die Vorrichtung 10₇ eine Fahreinheit 53 auf, mit welcher die Bewegungseinrichtung 24 verfahren werden kann. Folglich können der erste Stapelbereich 28 und der zweite Stapelbereich 30 weiter weg voneinander angeordnet sein.

In Figur 8 ist ein achtes Ausführungsbeispiel der erfindungsgemäßen Vorrichtung 10s anhand einer prinzipiellen Seitenansicht dargestellt. Die Befülleinrichtung 50 ist nicht an der Führungssäule 24 befestigt, sondern separat angeordnet. Die Befülleinrichtung 50 weist eine Haltestruktur 54 auf, die horizontal bewegbar ist und an welcher ein Führungsabschnitt 56 um die horizontal verlaufende Drehachse T2 drehbar angeordnet ist. Der Führungsabschnitt 56 kann auf eine nicht dargestellte Weise mit einem Schüttgut beaufschlagt werden, das vom Führungsabschnitt 56 in den stapelbaren Ladungsträger 12 rutscht. Aufgrund der horizontalen Bewegbarkeit kann das Schüttgut gleichmäßig in den stapelbaren Ladungsträger 12 befüllt werden.

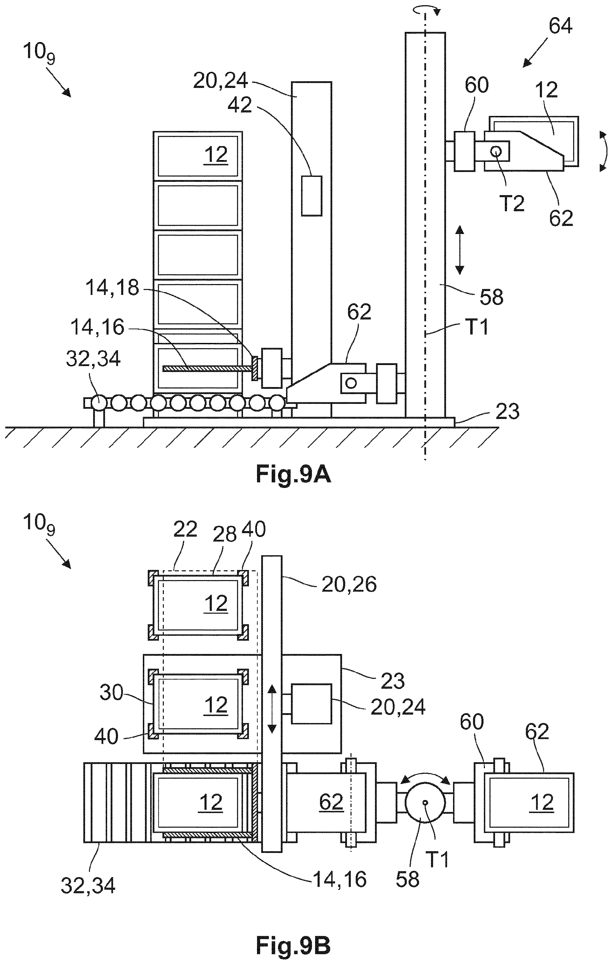

In den Figuren 9A und 9B ist ein neuntes Ausführungsbeispiel der erfindungsgemäßen Vorrichtung 10₉ anhand einer prinzipiellen Seitenansicht bzw. anhand einer prinzipiellen Draufsicht dargestellt. Der prinzipielle Aufbau der Vorrichtung 10₉ basiert auf dem Aufbau der Vorrichtung 10₂ nach dem zweiten Ausführungsbeispiel. Allerdings ist die Rollenbahn 34 gegenüber derjenigen des zweiten Ausführungsbeispiels um 90° gedreht. Weiterhin umfasst die Vorrichtung 10 eine Entleerungseinheit 64 mit einer weiteren Bewegungseinrichtung 60, die eine Hubsäule 58 aufweist, an welcher ein Adapter 62 zur Aufnahme eines stapelbaren Ladungsträgers 12 angeordnet ist. Die weitere Bewegungseinrichtung 60 kann so aufgebaut sein wie die Bewegungseinrichtung 20. Der Adapter 62 ist um die horizontal verlaufende Drehachse T2 und/oder um eine nicht dargestellte weitere horizontal verlaufende Drehachse drehbar an der Bewegungseinrichtung 60 gelagert. Die Hubsäule 58 ist um die vertikal verlaufende Achse T1 drehbar.

Die Vorrichtung 10₉ nach dem neunten Ausführungsbeispiel kann auf folgende Weise betrieben werden: Ein mit Ladegut befüllter stapelbarer Ladungsträger 12 wird von der Greifeinheit 14 vom zweiten Stapelabschnitt 30 auf die Rollenbahn 32 abgelegt. Der Adapter 62 wird so an die Rollenbahn 34 herangefahren, dass der stapelbare Ladungsträger 12 von der Rollenbahn in den Adapter 62 bewegt werden kann. Wie bereits erläutert, weist die Rollenbahn 32 angetriebene Rollen auf. Entsprechend kann auch der Adapter 62 angetriebene Rollen aufweisen, so dass der stapelbare Ladungsträger 12 sicher in den Adapter 62 überführt wird. Anschließend werden der Adapter 62 und der darin aufgenommene stapelbare Ladungsträger 12 durch Drehen der Hubsäule 58 um 180° gedreht und angehoben. Wenn der Adapter 62 und der stapelbare Ladungsträger 12 die gewünschte Höhe erreicht haben, wird der Adapter 62 um die horizontal verlaufende Drehachse T2 geschwenkt und der stapelbare Ladungsträger 12 entleert. Anschließend wird der entleerte stapelbare Ladungsträger 12 wieder auf die Rollenbahn 32 gefahren und von der Greifeinheit 14 in den ersten Stapelbereich 28 bewegt. Insofern dient die Entleerungseinheit 64 primär dem Entleeren der stapelbaren Ladungsträger 12, sie kann aber auch zum Befüllen der stapelbaren Ladungsträger 12 verwendet werden. Darüber hinaus kann die übrige Vorrichtung 10₉ genauso betrieben werden wie beispielsweise die Vorrichtung 10₁, 10₂ nach dem ersten und zweiten Ausführungsbeispiel. Folglich können die stapelbaren Ladungsträger 12 mit dem von der Werkzeugmaschine 36 produzierten Ladegut beladen und anschließend im zweiten Stapelabschnitt 30 gelagert werden. Wenn sämtliche stapelbaren Ladungsträger 12 befüllt sind, können diese auf die beschriebene Weise mittels der Entleerungseinheit 64 entleert werden. Auch können die befüllten stapelbaren Ladungsträger 12 auch dann entleert werden, wenn leere stapelbare Ladungsträger 12 befüllt werden.

Die Entleerungseinheit 64 umfasst im dargestellten Ausführungsbeispiel zwei Adapter 62, so dass zwei stapelbare Ladungsträger 12 gleichzeitig bearbeitet werden können. Es ist aber auch möglich, nur einen Adapter 62 vorzusehen.

Nicht dargestellt sind Ausführungsformen, bei denen die Hubsäule 58 der Entleerungseinheit 64 nicht in Verlängerung der Rollenbahn, sondern neben der Rollenbahn 34 angeordnet ist. Auch kann die Drehung der Hubsäule 58 um die vertikal verlaufende Drehachse T1 auf 90° beschränkt werden, was insbesondere dann sinnvoll ist, wenn nur ein Adapter 62 vorgesehen ist.

### Bezugszeichenliste

- 10, 10₁ - 10₉: Vorrichtung
- 12: stapelbarer Ladungsträger
- 14: Greifeinheit
- 16: Greifer
- 18: Querträger

- 20: Bewegungseinrichtung
- 22: Aktionsraum
- 23: Grundplatte
- 24: Führungssäule
- 26: Führungsbalken
- 28: erster Stapelbereich

- 30: zweiter Stapelbereich
- 32: Zu- und/oder Abführeinrichtung
- 34: Rollenbahn
- 36: Werkzeugmaschine
- 38: Befüllbereich

- 40: Stabilisierungseinrichtung
- 42: Steuereinheit
- 44: Transportwagen
- 46: Träger
- 48: Drehführung

- 50: Befülleinrichtung
- 51: Aufnahmeabschnitt
- 52: Halteholm
- 53: Antriebseinheit
- 54: Haltestruktur
- 56: Führungsabschnitt

- 58: Hubsäule

- 60: weitere Bewegungseinrichtung
- 62: Adapter
- 64: Entleerungseinheit

- T1: vertikal verlaufende Drehachse
- T2: horizontal verlaufende Drehachse

## Patentansprüche

1. Vorrichtung zum Bewegen von stapelbaren Ladungsträgern (12), umfassend
- eine Greifeinheit (14) zum Ergreifen oder Untergreifen zumindest eines stapelbaren Ladungsträgers (12),
- eine Bewegungseinrichtung (20), mit welcher die Greifeinheit (14) innerhalb eines Aktionsraums (22) bewegbar ist,
- einen ersten Stapelbereich (28), in welchem zumindest ein stapelbarer Ladungsträger (12) ablegbar ist,
- einen zweiten Stapelbereich (28), in welchem zumindest ein stapelbarer Ladungsträger (12) ablegbar ist,
- wobei der erste Stapelbereich (28) und der zweite Stapelbereich (28) innerhalb des Aktionsraums (22) angeordnet sind, und
- zumindest eine Zu- und/oder Abführeinrichtung (32), mit welcher zumindest ein stapelbarer Ladungsträger (12) in den Aktionsraum (22) zuführbar und/oder aus dem Aktionsraum (22) abführbar ist und/oder
mit welcher ein stapelbarer Ladungsträger (12) mit Ladegut befüllbar ist.

2. Vorrichtung nach Anspruch 1,
**dadurch gekennzeichnet, dass** die Vorrichtung zumindest einen im Aktionsraum (22) angeordneten Befüllbereich (38) aufweist, in welchem der stapelbare Ladungsträger (12) mit einem Ladegut befüllbar ist.

3. Vorrichtung nach Anspruch 2,
**dadurch gekennzeichnet, dass** die Vorrichtung eine Befülleinrichtung (50) aufweist, mit welcher der stapelbare Ladungsträger (12) mit Ladegut befüllbar ist.

4. Vorrichtung nach einem der vorherigen Ansprüche,
**dadurch gekennzeichnet, dass** die Bewegungseinrichtung (20) eine vertikal verlaufende Führungssäule (24) umfasst, entlang welcher die Greifeinheit (14) in vertikaler Richtung bewegbar ist.

5. Vorrichtung nach Anspruch 4,
**dadurch gekennzeichnet, dass** die Bewegungseinrichtung (20) einen horizontal verlaufenden Führungsbalken (26) aufweist, der vertikal bewegbar mit der Führungssäule (24) verbunden ist und entlang welchem die Greifeinheit (14) in horizontaler Richtung bewegbar ist.

6. Vorrichtung nach einem der Ansprüche 4 oder 5,
**dadurch gekennzeichnet, dass** die Bewegungseinrichtung (20) einen Halteholm (52) aufweist, der horizontal bewegbar mit dem Führungsbalken (26) verbunden ist und an welchem die Greifeinheit (14) befestigt ist.

7. Vorrichtung nach einem der Ansprüche 4 bis 6,
**dadurch gekennzeichnet, dass** die Führungssäule (24) um eine vertikal verlaufende Drehachse (T1) drehbar ist.

8. Vorrichtung nach Anspruch 7,
**dadurch gekennzeichnet, dass** die Führungssäule (24) eine Drehführung (48) umfasst, welche derart ausgestaltet ist, dass die Greifeinheit (14) mit einem sich ändernden Abstand zur Drehachse (T1) um die Drehachse (T1) drehbar ist.

9. Vorrichtung nach den Ansprüchen 3 und 7 oder nach den Ansprüchen 3 und 8,
**dadurch gekennzeichnet, dass** die Befülleinrichtung (50) in vertikaler Richtung bewegbar mit der Führungssäule (24) verbunden ist.

10. Vorrichtung nach den Ansprüchen 3 bis 9,
**dadurch gekennzeichnet, dass** die Befülleinrichtung (50) horizontal bewegbar ist.

11. Vorrichtung nach den Ansprüchen 3 bis 10,
**dadurch gekennzeichnet, dass** die Befülleinrichtung (50) eine um eine horizontal verlaufende Drehachse (T2) drehbar ist.

12. Vorrichtung nach einem der vorherigen Ansprüchen,
**dadurch gekennzeichnet, dass** die Zu- und/oder Abführeinrichtung (32) angetrieben ist.

13. Vorrichtung nach einem der vorherigen Ansprüchen,
**dadurch gekennzeichnet, dass** die Vorrichtung (10) eine Fahreinheit (53) aufweist, mit welcher die Bewegungsvorrichtung (20) verfahrbar ist.

14. Vorrichtung nach einem der vorherigen Ansprüchen,
**dadurch gekennzeichnet, dass** die Vorrichtung (10) eine Entleerungseinheit (64) zum Entleeren von befüllten stapelbaren Ladungsträgern (12) umfasst.

15. Vorrichtung nach einem der vorherigen Ansprüchen,
**dadurch gekennzeichnet, dass** der erste Stapelbereich (28) und/oder der zweite Stapelbereich (28) eine Stabilisierungseinrichtung (40) zum Stabilisieren der stapelbare Ladungsträger (12) aufweist.

16. Vorrichtung nach einem der vorherigen Ansprüchen,
**gekennzeichnet durch** eine in der Vorrichtung (10) angeordnete Steuereinheit (42) zum Steuern der Vorrichtung (10) aufweist.
